# EUROPEAN PATENT SPECIFICATION

(11) **EP 3 396 372 B1**
(45) Date of publication and mention of the grant of the patent: **08.04.2020**
(21) Application number: 17168223.0
(22) Date of filing: 26.04.2017
(51) Int. Cl.: G01N 30/38, B01D 15/18, G01N 30/20

(54) **APPARATUS AND METHOD FOR RECIRCULATION OF FLUIDS INCLUDING TWO 4-PORT 2-WAY-VALVES**
VORRICHTUNG UND VERFAHREN ZUR RÜCKFÜHRUNG VON FLÜSSIGKEITEN MIT ZWEI 4-PORT 2-WEGEVENTILEN
APPAREIL ET PROCÉDÉ DE RECIRCULATION DE FLUIDES COMPRENANT DEUX VALVES 4-PORT 2-POSITIONS

(43) Date of publication of application: 31.10.2018
(73) Proprietor: Watrex Praha, s.r.o., 161 00 Praha 6 - Ruzyne (CZ)
(72) Inventor: Minarik, Milan, 252 25 Orech (CZ); Minarik, Marek, 252 25 Orech (CZ); Franc, Martin, 149 00 Praha 4 (CZ)
(74) Representative: Hartvichova, Katerina

(56) References cited:
- EP-A1- 0 022 654
- EP-A1- 0 892 267
- EP-A1- 2 165 191
- US-A- 4 102 179
- US-A1- 2010 218 585
- US-A1- 2016 187 304

## Description

### Field of Art

The present invention provides an apparatus and method for recirculation (or recycling) of fluids.

### Background Art

Today, scientists are often faced with the need for separation of complex samples that cannot be adequately separated using isocratic HPLC mode and require an inordinate amount of time for development of adequate gradient method for required separation. Long separation columns or series of standard analytical columns are often needed for achieving a sufficient resolution. However, use of long chromatographic columns or series of standard analytical columns is connected with drawbacks such as low flow-rate or need for high pressure, resulting in prolongation of time needed for the separation and need for more complex and costly equipment.

Furthermore, in many other applications, it is necessary to develop a system for recirculation of fluids under pressure which would not require the fluid to pass through a pump, e.g., because the fluid is strongly corrosive or there are other reasons for which the fluid is incompatible with the material of the pump or the pump tubings.

EP 2165191 (WO2009003520) describes a sample insertion system, suitable for e.g. HPLC, which comprises an arrangement of two valves and two fluid paths. The arrangement comprises a first valve comprising a first port adapted to be coupled to a fluid delivery system, a second port and a third port, wherein the first valve is adapted to switch, in a first switch transition, from a first state wherein the first port is coupled with the second port, over a second state wherein the first port, the second port and the third port are coupled altogether, to a third state wherein the first port is coupled with the third port. The arrangement further comprises a second valve comprising a fifth port adapted to be coupled to the stationary phase, a sixth port, and a seventh port, wherein the secondvalve is adapted to switch, in a second switch transition, from a fourth state wherein the fifth port is coupled with the sixth port, to a fifth state wherein the fifth port is coupled with the sevent port. Furthermore, the arrangement comprises a first fluid path connecting the second port and the sixth port, and a second fluid path connecting the third port and the seventh port, wherein the second fluid path comprises a sample introduction path adapted for introducing the sample fluid into the mobile phase. The aim of this arrangement is to allow sample introduction at low pressure into the second fluid path in a position of the valves which at the moment of insertion of the sample disconnects the path from the fluid delivery system and the stationary phase. Then the valves are switched into another position, to allow the introduction of the sample into the mobile phase delivered to the stationary phase. This document does not address the problem of recirculation of fluids.

### Disclosure of the Invention

The present invention relates to an apparatus for recirculation of fluids according to claim 1 and to a method for recirculating a fluid according to claim 6.

In a first aspect, the present invention relates to an apparatus for recirculation (or recycling) of fluids in a closed loop with zero dead-volume. The pressurizing means (e.g., a pump) is outside the loop. Said apparatus comprises a pressure inlet connected to a first 4-port 2-way valve in a first port position of the valve, a second port position of the first valve is connected with a first end of a first tubing, a fourth port position of the first valve is connected with a first end of a second tubing; the first tubing is on its second end connected with a second 4-port 2-way valve in a second port position of the valve, the second tubing is on its second end connected with the second valve in a fourth port position of the valve; and a first port position of the second valve is connected with an inlet of a fluid-treating element, and an outlet of the fluid-treating element is connected with the first or the second valve.

The valves are coupled to be in identical positions of the ports and ways at any moment, i.e., when the first valve is in a position when the ports in the first and second port position are connected by a channel (way) and the ports in the third and fourth port position are connected by a channel (way), the second valve is also in a position when the ports in the first and second port position are connected by a channel (way) and the ports in the third and fourth port position are connected by a channel (way). And when the first valve is in a position when the ports in the second and third port position are connected by a channel (way) and the ports in the first and fourth port position are connected by a channel (way), the second valve is also in a position when the ports in the second and third port position are connected by a channel (way) and the ports in the first and fourth port position are connected by a channel (way).

The 4-port 2-way valves suitable for use in this invention are valves in which the fluid flows from an inlet port to a neighbouring port. Valves in which the fluid flows from an inlet port to an opposite port are not suitable for the apparatus of this invention. The numbering of port positions of the valve, whenever used, refers to the order of ports in the clockwise or counterclockwise sense. These valves have two positions where two and two ports are connected by channels (ways), and they may also have a closed position when no ports are connected by channels.

"Tubing" should be understood as a long hollow cylinder used for moving fluids, e.g., a pipe or a tube or a capillary.

A "pressure inlet" is an inlet by which a pressure is brought into the system (apparatus). The pressure propells the fluid through the apparatus. The source of the pressure is a pressurizing means. The pressurizing means may be, for example, a pump or a source of pressurized gas.

The fluid circulates in the apparatus in a closed loop, the closed loop involving the first valve, the first tubing, the second valve, the fluid-treating means, and the second tubing.

In a first alternative of the present invention, the outlet of the fluid-treating element is connected with a third port position of the second valve, while a third port position of the first valve is connected with an outlet from the apparatus.

In this alternative, when the valves are in their first position connecting the ports, the recirculated fluid circulates, propelled by the pressure created by the pressurizing means and introduced into the apparatus via the first valve, through the first tubing towards the second valve, from the second valve it enters the fluid-treating element, optionally through an inlet tubing of the fluid-treating element, and from the outlet of the fluid treating element, optionally through an outlet tubing of the fluid-treating element, the recirculated fluid enters the second tubing via the second valve. The flow rate and the switching frequency should be set so that when the recirculated fluid fills a part of the second tubing, the valves are switched to their second position connecting the ports, and then the pressure created by the pressurizing means propells the recirculated fluid in the second tubing to enter the inlet of the fluid-treating element via the second valve and to leave the fluid-treating element via the second valve to enter the first tubing. When the recirculated fluid fills a part of the first tubing, the valves are switched to their first position connecting the ports and the cycle of the recirculation of the fluid can start again as described.

In a second alternative of the present invention, the outlet of the fluid-treating element is connected with a third port position of the first valve, while a third port position of the second valve is connected with an outlet from the apparatus.

In this alternative, when the valves are in their first position connecting the ports, the recirculated fluid circulates, propelled by the pressure created by the pressurizing means and introduced into the apparatus via the first valve, through the first tubing towards the second valve, from the second valve it enters the fluid-treating element, optionally through an inlet tubing of the fluid-treating element, and from the outlet of the fluid treating element, optionally through an outlet tubing of the fluid-treating element, the recirculated fluid enters the second tubing via the first valve. The flow rate and the switching frequency should be set so that when the recirculated fluid fills completely the second tubing, the valves are switched to their second position connecting the ports, and then the pressure created by the pressurizing means propells the recirculated fluid in the second tubing to enter the inlet of the fluid-treating element via the second valve and to leave the fluid-treating element via the first valve to enter the first tubing. When the recirculated fluid fills the first tubing, the valves are switched to their first position connecting the ports and the cycle of the recirculation of the fluid can start again as described.

Every recirculation cycle comprises two recirculation steps, i.e., two passes of the fluid through the fluid-treating element. The fluid-treating element may be an element for remediation of impurities from the fluid, i.e. for purification of the fluid, or a chromatographic column, or any other suitable element. The fluid-treating element may also comprise a detector for analyzing the quality or composition or chromatographic resolution of the fluid. The fluid-treating element must be a flow-through element.

The present invention allows the fluid to be recirculated without the need to enter the pressurizing means. This is especially advantageous when there is a small volume of the recirculated fluid, or where the fluid is incompatible with the pressurizing means (e.g., a strongly corrosive fluid incompatible with the material of a pump), or where the material of the pressurizing means would release impurities into the recirculated fluid. The present invention further allows to use pressurized gas as the pressurizing means.

Preferably, the first and the second tubing have the cross-section diameter of up to 2 mm, preferably 0.1 to 0.5 mm, more preferably 0.1 to 0.3 mm. Such cross-section diameter ensures that the fluid is not stirred or mixed during the recirculation. This is especially advantageous when the fluid-treatment element is a chromatographic column and the aim of the recirculation is to achieve a better chromatographic separation of components of the fluid by repeated separation of the fluid on a chromatographic column, whereas the chromatographic column is the fluid-treating element. In the first embodiment, the fluid changes the gradient/direction when entering the fluid-treating element (i.e., the portion of the fluid having left the fluid-treating element as the last portion in one recirculation step enters the fluid-treating element as the first portion in the following recirculation step) in each recirculation through the fluid-treating element. In the second embodiment, the fluid enters the fluid-treating element always in the same gradient/direction (i.e., the portion of the fluid having left the fluid-treating element as the first portion in one recirculation step enters the fluid-treating element as the first portion in the following recirculation step)

The volume of the first tubing, as well as the volume of the second tubing, should be identical or larger than the volume of the fluid portion to be transported by recirculation. This allows the whole volume of the fluid to be kept in one tubing while the valves switch to another position. It also allows to achieve reproducibility and control of the processes occuring on the fluid-treating element, because it ensures that in each recirculation step, the whole volume reliably and reproducibly passes through the fluid-treating element. Preferably, in the first embodiment, the volume of each tubing is larger than the volume of the fluid to be recirculated. Preferably, in the second embodiment, the volume of each tubing is identical to the volume of the portion of fluid to be transported by recirculation.

Optionally, the apparatus may additionally contain a loop for separating and keeping a portion of the recirculated fluid separately from the remaining fluid (i.e., a separation loop). Said loop comprises a third 4-port 2-way valve, positioned between the fluid-treating element and the first or second tubing. The third valve has a first port position for inflow of the fluid flowing from the fluid-treating element, a second port position for outflow of the fluid towards the first or second tubing, a third port position and a fourth port positions which are both connected with a third tubing, said third tubing forming a loop between the third port position and the fourth port position of the third valve.

When it is desired to separate a certain portion of the recirculated fluid, the third valve is positioned into a first position in which the first and the fourth port positions are connected by a valve channel, and the second and third port positions are connected by a valve channel. The fluid flowing from the fluid-treating element enters the separation loop via the third valve, more particularly via the channel connecting its first and fourth port position and flows into the third tubing. It is particularly advantegous when the fluid-treating element comprises a detector, and when the detector detects the presence of the desired portion of the fluid, the third valve is switched into its first position. When it is no longer desired to collect fluid into the separation loop, the third valve is switched into its second position in which the first and the second port positions are connected by a valve channel, and the third and fourth port positions are connected by a valve channel. In this second position, the recirculated fluid flows through the valve channel between the first and second port positions from the fluid-treating element to the second tubing. The third tubing is not connected to the system in this position, and no fluid flows in or out from the third tubing.

In a second aspect, the present invention provides a method for recirculating fluid using the apparatus of the present invention. In the first step, the fluid to be recirculated is introduced into the first tubing and the valves are positioned into their first position connecting the ports, wherein the first and second port positions are connected by a channel, and the third and fourth port positions are connected by a channel, and the fluid is propelled by the pressure, preferably created by the pressurizing means, through the first tubing towards the second valve, from the second valve the fluid is propelled into the fluid-treating element and then it is propelled from the fluid-treating element into the second tubing. The recirculated fluid can be propelled into the second tubing via the first valve or via the second valve.

After the recirculated fluid is collected in the second tubing, the valves are switched to their second position connecting the ports, wherein the first and fourth port positions are connected by a channel, and the second and third port positions are connected by a channel, and then the recirculated fluid is propelled from the second tubing into the fluid-treating element via the second valve, and then from the fluid-treating element to enter the first tubing. The recirculated fluid can be propelled into the first tubing via the first valve or via the second valve. This cycle of the recirculation of the fluid can be repeated for as many times as required. When it is desired to terminate the recirculation, the fluid can be collected or disposed of through the outlet from the apparatus.

When the pressure created by the pressurizing means is stable and the valves are switched between their first position and their second positions in regular intervals, a constant volume of the fluid passes through the recirculation system, i.e., into the first or the second tubing.

The fluid can be a liquid (e.g., a solution of analytes for chromatography) or a gas.

The present invention is particularly suitable for performing chromatography, in particular chromatography of poorly separable mixtures where a very long chromatographic column would be needed, or where a series of chromatographic columns would be needed. The apparatus and method of this invention allow to use only one chromatographic column (as the fluid-treating element) over which the fluid is recirculated repeatedly. With the corresponding cross-sectional diameter of the first and second tubing, the fluid is not stirred or mixed, and the system of the present invention does not require the fluid to pass through the pressurizing means, which would inevitably (with regard to the cross-sectional diameters of pumps, for instance) result in stirring the fluid. In the embodiment suitable for chromatography, the fluid-treating element preferably includes a chromatographic column and a detector.

### Brief Description of Drawings

Fig. 1 shows the embodiment of Example 1, which is an example of the first alternative of the invention; (A) valves are in their first position connecting the ports, (B) valves are in their second position connecting the ports.
Fig. 2 shows the embodiment of Example 2, which is an example of the second alternative of the invention; (A) valves are in their first position connecting the ports, (B) valves are in their second position connecting the ports.
Fig. 3 shows the embodiment of Example 1 with an added separation loop, as described in Example 3; (A) the third valve is in its first position, (B) the third valve is in its second position.
Fig. 4 shows the embodiment of Example 2 with an added separation loop, as described in Example 3; (A) the third valve is in its first position, (B) the third valve is in its second position.
Fig. 5 shows the HPLC separation of benzene Isotopologues mixture (1:1) using recirculation apparatus described in Example 1. Conditions: Column Deltasil 100-5 C18 250x4mm; mobile phase: 70% MeOH/30% H₂O; flowrate: 0.6 ml/min; injection volume: 3µl; sample: 1% benzene and 1% D6-benzene in mobile phase; switching cycles: 4s; Originally fused peak 1 comprises both components. The components were completely separated after 17 recycles as shown on the chromatogram.
Fig. 6 shows the HPLC separation of Imidazolium helicen racemate mixture using recirculation apparatus described in Example 2. Conditions: Column Chiralpak IA 250x4.6mm; mobile phase: Heptane/Isopropyl alcohol/Triethylamine/Trifluoro acetic acid - 64.6%/35%/0.2%/0.4%; flowrate: 1ml/min; switching cycles: 4s; injection volume: 10µl; sample: imidazolium helicene racemate in mobile phase, 3mg/ml; Originally fused peak 1 comprising both enantiomers was completely separated after 10 recycles as shown on the chromatogram.

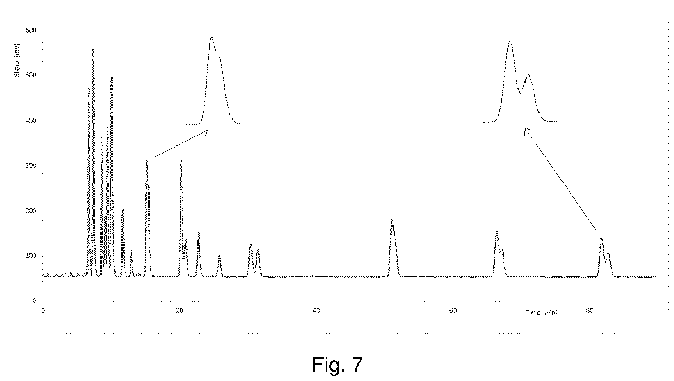

Fig. 7 shows the HPLC separation of polyaromatic hydrocarbon mixture using recirculation apparatus with separation loop described in Example 3. Conditions: Column Deltasil 100-5 C18 250x4mm; mobile phase 85% ACN/ 15% H₂O; flowrate: 0.65 ml/min; injection volume 1ul; sample: EPA 610 PAH standard mixture. Separation loop: inner volume 1.5ml, ID 0.5mm, switching cycles Is. The peak shown in detail on the left was collected in separation loop and after all components of the analyzed sample were eluted from the chromatographic column, the recycle was started (in 34. minute) and after 3 recycles chrysen and benz[a]pyren were sufficiently resolved with resolution 0.79.

### Examples of carrying out the Invention

### Example 1

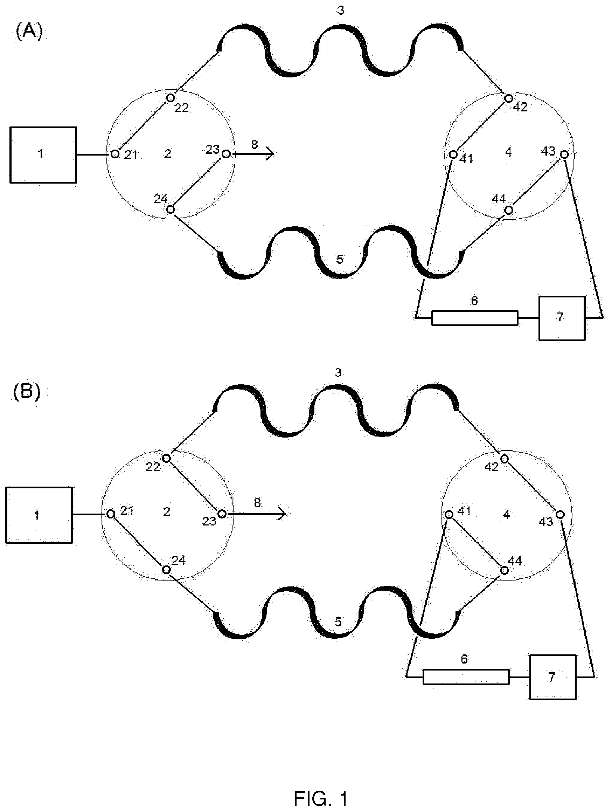

An example of an apparatus for recirculation of fluids is shown in Fig. 1. Part (A) shows the apparatus wherein the valves are in their first position connecting the ports, part (B) shows the apparatus wherein the valves are in their second position connecting the ports.

The apparatus comprises a pressure inlet connecting pressurizing means 1, such as a pump, and a first port position 21 of a first 4-port 2-way valve 2, whereas a second port position 22 of the first valve 2 is connected with a first tubing 3, a fourth port position 24 of the first valve 2 is connected with a second tubing 5; the first tubing 3 is on its second end connected with a second port position 42 of a second 4-port 2-way valve 4, the second tubing 5 is on its second end connected with a fourth port position 44 of the second valve 4; and a first port position 41 of the second valve 4 is connected with an inlet of a fluid-treating element consisting of a chromatographic column 6 and a detector 7, and an outlet of the fluid-treating element 6, 7 is connected with a third port position 43 of the second valve 4, while a third port position 23 of the first valve 2 is connected with an outlet 8 from the apparatus.

In this embodiment, when the valves are in their first position connecting the ports (see Fig. 1 (A)), the recirculated fluid circulates, propelled by the pressure created by the pressurizing means 1 and introduced into the apparatus via the pressure inlet and the first valve 2, through the first tubing 3 towards the second valve 4, from the second valve 4 the fluid enters the chromatographic column 6 and the detector 7, and from the outlet of the detector 7, the recirculated fluid enters the second tubing 5 via the second valve 4. When all the recirculated fluid is collected in the second tubing 5, the valves 2, 4 are switched to their second position connecting the ports (see Fig. 1 (B)), and then the pressure created by the pressurizing means 1 propells the recirculated fluid in the second tubing 5 to enter the chromatographic column 6 and the detector 7 via the second valve 4 and to leave the column 6 and the detector 7 via the second valve 4 to enter the first tubing 3. When the recirculated fluid enters the first tubing 3, the valves are switched to their first position connecting the ports (Fig. 1 (A)) and the cycle of the recirculation of the fluid can start again as described.

### Example 2:

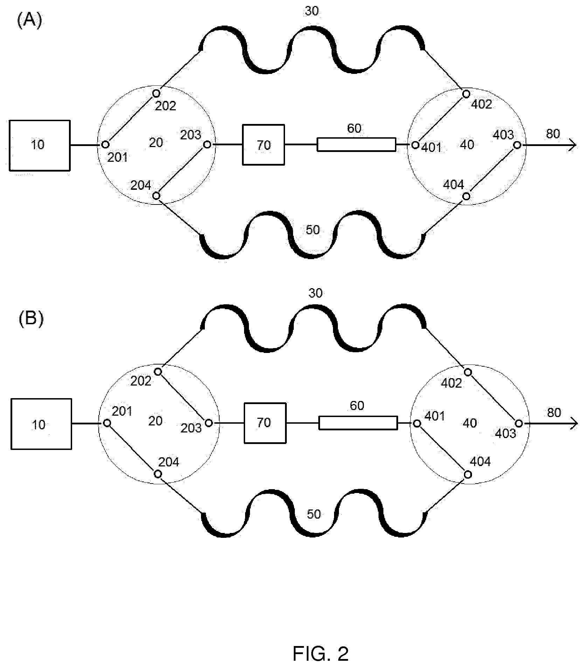

An example of an apparatus for recirculation of fluids is shown in Fig. 2. Part (A) shows the apparatus wherein the valves are in their first position connecting the ports, part (B) shows the apparatus wherein the valves are in their second position connecting the ports.

The apparatus comprises a pressure inlet connecting pressurizing means 10, such as a pump, and a first port position 201 of a first 4-port 2-way valve 20, whereas a second port position 202 of the first valve 20 is connected with a first tubing 30, a fourth port position 204 of the first valve 20 is connected with a second tubing 50; the first tubing 30 is on its second end connected with a second port position 402 of a second 4-port 2-way valve 40, the second tubing 50 is on its second end connected with a fourth port position 404 of the second valve 40; and a first port position 401 of the second valve 40 is connected with an inlet/outlet of a fluid-treating element consisting of a chromatographic column 60 and a detector 70, and a second inlet/outlet of the fluid-treating element 60, 70 is connected with a third port position 203 of the first valve 20, while a third port position 403 of the second valve 40 is connected with an outlet 80 from the apparatus.

In this embodiment, when the valves are in their first position connecting the ports (see Fig. 2 (A)), the recirculated fluid circulates, propelled by the pressure created by the pressurizing means 10 and introduced into the apparatus via the pressure inlet and the first valve 20, through the first tubing 30 towards the second valve 40, from the second valve 40 it enters the chromatographic column 60 and the detector 70, and from the outlet of the detector 70, the recirculated fluid enters the second tubing 50 via the first valve 20. When the recirculated fluid is in the second tubing 50 (preferably quantitatively fills the second tubing 50) the valves are switched to their second position connecting the ports (see Fig. 2 (B)), and then the pressure created by the pressurizing means 10 propells the recirculated fluid in the second tubing 50 to enter the chromatographic column 60 and the detector 70 via the second valve 40 and to leave the chromatographic column 60 and the detector 70 via the first valve 20 to enter the first tubing 30. When the recirculated fluid enters the first tubing 30 (preferably quantitatively fills the first tubing 30) the valves 20, 40 are switched to their first position connecting the ports (Fig. 2 (A)) and the cycle of the recirculation of the fluid can start again as described.

### Example 3:

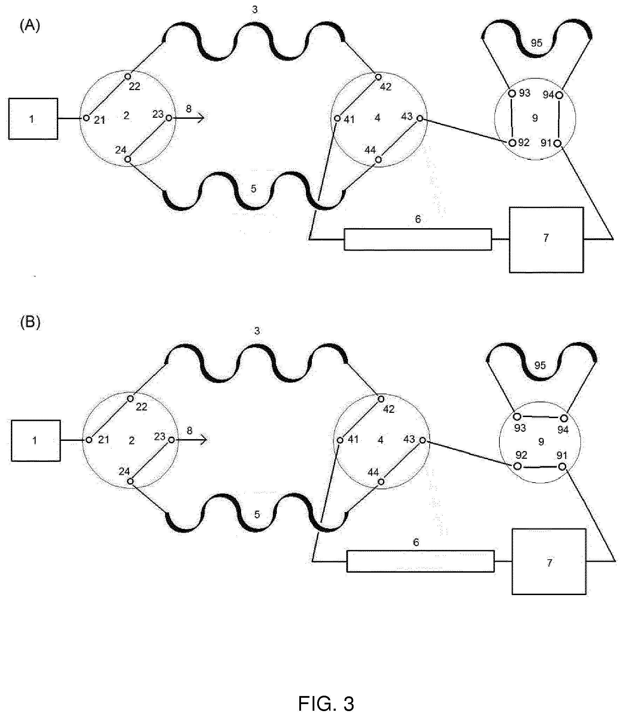

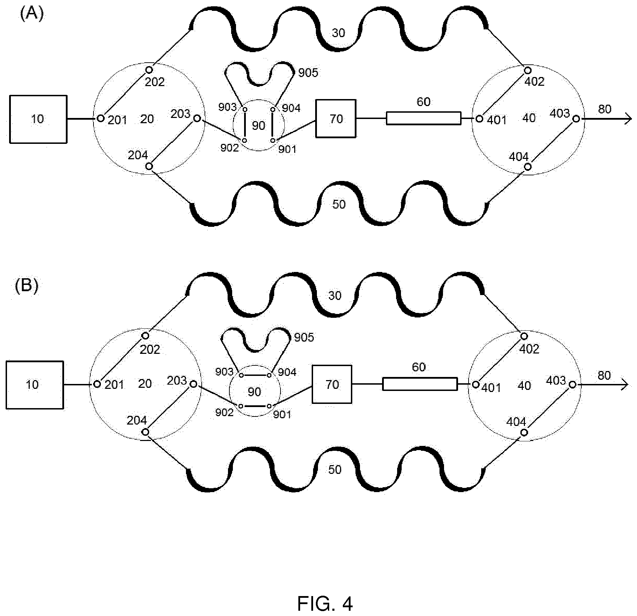

Fig. 3 shows the apparatus as described in Example 1, additionally provided with a separation loop. Fig. 4 shows the apparatus as described in Example 2, additionally provided with the separation loop.

As can be seen in both Fig. 3 and Fig. 4, the loop for separating and keeping a portion of the recirculated fluid separately from the remaining fluid (i.e. a separation loop) comprises a third 4-port 2-way valve 9, 90, positioned between the fluid-treating element 6, 60, 7, 70 and the second tubing 5, 50. The third valve 9, 90 has a first port position 91, 901 for inflow of the fluid flowing from the fluid-treating element 6, 60, 7, 70, a second port position 92, 902 for outflow of the fluid towards the second tubing 5, 50, a third port position 93, 903 and a fourth port positions 94, 904 which are both connected with a third tubing 95, 905, said third tubing 95, 905 forming a loop between the third port position 93, 903 and the fourth port position 94, 904 of the third valve 9, 90.

When it is desired to separate a certain portion of the recirculated fluid, the third valve 9, 90 is positioned into a first position (see Fig. 3 (A) and Fig. 4 (A)) in which the first 91, 901 and the fourth port positions are connected by a valve channel, and the second and third port positions are connected by a valve channel. The fluid flowing from the fluid-treating element enters the separation loop via the third valve 9, 90, more particularly via the channel connecting its first 91, 901 and fourth port position 94, 904 and flows into the third tubing 95, 905. It is particularly advantegous when the fluid-treating element comprises a detector, and when the detector detects the presence of the desired portion of the fluid, the third valve 9, 90 is switched into its first position.

When it is no longer desired to collect fluid into the separation loop, the third valve 9, 90 is switched into its second position (see Fig. 3 (B) and Fig. 4 (B)) in which the first 91, 901 and the second port positions 92, 902 are connected by a valve channel, and the third 93, 903 and fourth port positions 94, 904 are connected by a valve channel. In this second position, the fluid flows through the valve channel between the first 91, 901 and second port positions 92, 902 from the fluid-treating element to the second tubing. The third tubing 95, 905 is not connected to the system in this position, and no fluid flows in or out from the third tubing 95, 905.

For obtaining the fluid collected in the third loop, the third valve 9, 90 is switched to its first position and the fluid is forced out of the third tubing 95, 905 by pressure. In Fig. 3 (B), the fluid is forced out of the third tubing 95 to the second tubing 5 via the second valve 4. In Fig. 4 (B), the fluid is forced out of the third tubing 905 to the second tubing 50 via the first valve 20.

### Example 4:

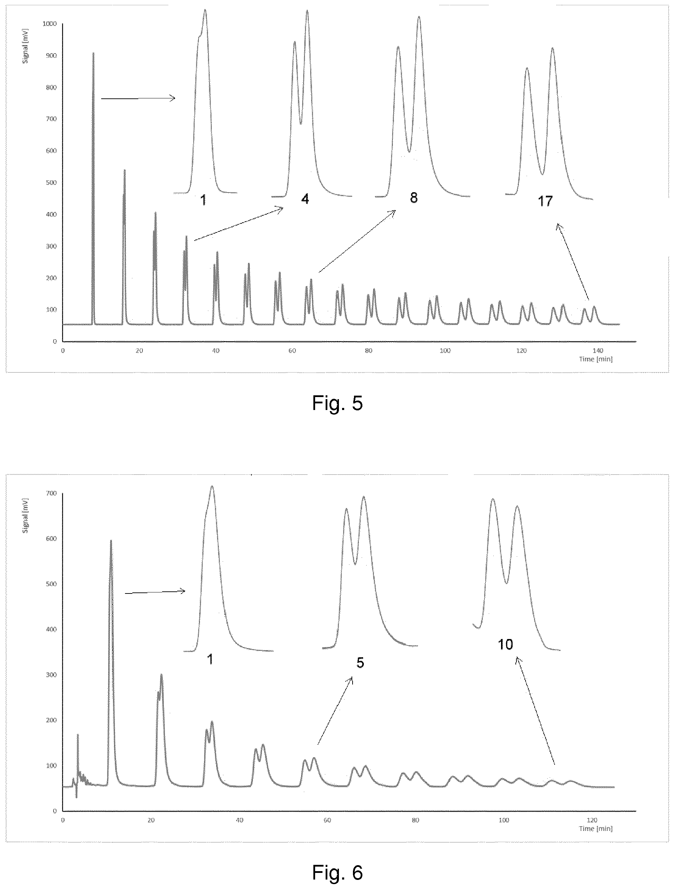

Fig. 5, shows a chromatogram of the mixture of benzene isotopologues using the apparatus as described in Example 1. The analysis conditions were as follows:

| | |
|---|---|
| Column | Deltasil 100-5 C18 250x4mm |
| Mobile phase | 70% MeOH/30% H₂O |
| Flow rate | 0.6 ml/min |
| Sample | 1% benzene and 1% D₆-benzene in mobile phase |
| Injection volume | 3µl |
| Switching interval | 4s |
| Tubing dimensions | ID 0.25mm, volume 60 µl |

A poor separation in standard chromatographic analysis (peak No.1) is improved to a complete separation after 17 recycles as shown on picture.

### Example 5:

Fig. 6 shows separation of Imidazolium helicene racemate mixture using recirculation apparatus described in Example 2. The analysis conditions were as follows:

| | |
|---|---|
| Column | Chiralpak IA 250x4,6mm, 5µm |
| Mobile phase | Heptane/Isopropyl alcohol/Triethylamine/Trifluoro acetic acid - 64.6%/35%/0.2%/0.4% |
| Flow rate | 1 ml/min |
| Sample | imidazolium helicene racemate in mobile phase, 3mg/ml |
| Injection volume | 10µl |
| Switching interval | 4s |
| Tubing dimensions | ID 0.25mm, volume 60 µl |

Originally fused both enantiomers in peak 1 were completely separated after 10 recycles as shown on the chromatogram. Without using the apparatus of the invention, the only way to separate completely these enantiomers would be using a serial arrangement of 10 identical columns, such requirement would increase the price beyond an acceptable level.

### Example 6

FIG. 7 shows a chromatogram of polyaromatic hydrocarbon mixture using the apparatus as described in Example 3. The analysis conditions were as follows:

| | |
|---|---|
| Column | Deltasil 100-5 C18 250x4mm |
| Mobile phase | 85% ACN/15% H₂O |
| Flow rate | 0.65 ml/min |
| Sample | PAH standard mixture according to EPA 610 |
| Injection volume | 1µl |
| Switching interval | 1s |
| Tubing dimensions | ID 0.13mm, volume 20 µl |
| Separation loop | ID 0.5mm, volume 1.5 ml |

Originally two non-separated components of complex PAH standard (Chrysene and benz[a]pyrene) were collected in separation loop and after all components of the analyzed standard were eluted from chromatographic column, the recycle was started and after 3 recycles chrysene and benz[a]pyrene were sufficiently resolved as shown on this picture.

## Claims

1. An apparatus for recirculation of fluids, said apparatus comprising a pressure inlet connected with a first 4-port 2-way valve (2, 20) in a first port position (21, 201) of the valve (2, 20), wherein a second port position (22, 202) of the first valve (2, 20) is connected with a first end of a first tubing (3, 30), a fourth port position (24, 204) of the first valve (2, 20) is connected with a first end of a second tubing (5, 50); the first tubing (3, 30) is on its second end connected with a second 4-port 2-way valve (4, 40) in a second port position (42, 402) of the valve (4, 40), the second tubing (5, 50) is on its second end connected to the second valve (4, 40) in a fourth port position (44, 404) of the valve (4, 40); and a first port position (41, 401) of the second valve (4, 40) is connected with the first end of a fluid-treating element (6, 60, 7, 70), wherein the 4-port 2-way valves are valves in which the fluid flows from an inlet port to a neighbouring port, wherein when the valves (2, 20, 4, 40) are positioned into their first position, the first (21, 201, 41, 401) and second port positions (22, 202, 42, 402) are connected by a channel, and the third (23, 203, 43, 403) and fourth port positions (24, 204, 44, 404) are connected by a channel, and wherein when the valves (2, 20, 4, 40) are switched to their second position, the first (21, 201, 41, 401) and fourth port positions (24, 204, 44, 404) are connected by a channel, and the second (22, 202, 42, 402) and third port positions (23, 203, 43, 403) are connected by a channel, and wherein
- the second end of the fluid-treating element (6, 7) is connected with a third port position (43) of the second valve (4), while a third port position (23) of the first valve (2) is connected to an outlet (8) from the apparatus; or
- the second end of the fluid-treating element (60, 70) is connected with a third port position (203) of the first valve (20), while a third port position (403) of the second valve (40) is connected to an outlet (80) from the apparatus.

2. The apparatus according to claim 1, wherein the fluid-treating element is selected from an element for remediation of impurities from the fluid and an element for separation of components of the fluid, such as a chromatographic column (6, 60), wherein the fluid-treating element optionally further comprises a detector (7, 70) for analyzing the quality or composition or chromatographic resolution of the fluid components.

3. The apparatus according to any one of claims 1 or 2, wherein the pressure inlet is connected to a pressurizing means (1, 10), wherein preferably the pressurizing means is a pump or a source of pressurized gas.

4. The apparatus according to any one of claims 1 to 3, wherein the first (3, 30) and the second tubing (5, 50) have the cross-section diameter of up to 2 mm, preferably 0.1 to 0.5 mm, more preferably 0.1 to 0.3 mm.

5. The apparatus according to any one of claims 1 to 3, wherein the apparatus additionally contains a separation loop, wherein said separation loop comprises a third 4-port 2-way valve (9, 90), positioned between the fluid-treating element (6, 60, 7, 70) and the first (3, 30) or second tubing (5, 50), whereas said third valve has a first port position (91, 901) for inflow of the fluid flowing from the fluid-treating element (6, 60, 7, 70), a second port position (92, 902) for outflow of the fluid towards the first (3, 30) or second tubing (5, 50), a third (93, 903) and a fourth port positions (94, 904) which are both connected with a third tubing (95, 905), said third tubing (95, 905) forming a loop between the third port position (93, 903) and the fourth port position (94, 904) of the third valve (9, 90).

6. A method for recirculating fluid using the apparatus according to any one of the preceding claims, wherein the fluid to be recirculated is introduced into the first tubing (3, 30) and the valves (2, 20, 4, 40) are positioned into their first position connecting the ports, wherein the first (21, 201, 41, 401) and second port positions (22, 202, 42, 402) are connected by a channel, and the third (23, 203, 43, 403) and fourth port positions (24, 204, 44, 404) are connected by a channel, and the fluid is propelled by the pressure, introduced through the pressure inlet connected to a first port position (21, 201) of the first valve (2, 20), through the first tubing (3, 30) and through the second valve (4, 40) into the fluid-treating element (6, 60, 7, 70), and then the fluid is propelled from the fluid-treating element (6, 60, 7, 70) into the second tubing (5, 50); after the recirculated fluid is collected in the second tubing (5, 50), the valves (2, 20, 4, 40) are switched to their second position connecting the ports, wherein the first (21, 201, 41, 401) and fourth port positions (24, 204, 44, 404) are connected by a channel, and the second (22, 202, 42, 402) and third port positions (23, 203, 43, 403) are connected by a channel, and then the recirculated fluid is propelled from the second tubing (5, 50) into the fluid-treating element (6, 60, 7, 70) via the second valve (4, 40), and then from the fluid-treating element (6, 60, 7, 70) into the first tubing (3, 30).

7. The method according to claim 6 using the apparatus of claim 5, wherein when it is desired to separate a portion of the recirculated fluid, the third valve (9, 90) is positioned into a first position in which the first (91, 901) and the fourth port positions (94, 904) are connected by a valve channel, and the second (92, 902) and third port positions (93, 903) are connected by a valve channel, and the fluid flowing from the fluid-treating element (6, 60, 7, 70) is led to enter the separation loop via the third valve (9, 90) and flows into the third tubing (95, 905); and when it is no longer desired to collect fluid into the separation loop, the third valve (9, 90) is switched into its second position in which the first (91, 901) and the second port positions (92, 902) are connected by a valve channel, and the third (93, 903) and fourth port positions (94, 904) are connected by a valve channel.

## Patentansprüche

1. Vorrichtung zum Umwälzen von Flüssigkeiten, wobei die Vorrichtung einen Druckeinlass umfasst, der mit einem ersten 4/2-Wegeventil (2, 20) in einer ersten Anschlussposition (21, 201) des Ventils (2, 20) verbunden ist, wobei eine zweite Anschlussposition (22, 202) des ersten Ventils (2, 20) mit einem ersten Ende eines ersten Schlauchs (3, 30) verbunden ist, eine vierte Anschlussposition (24, 204) des ersten Ventils (2) mit einem ersten Ende eines zweiten Schlauchs (5, 50) verbunden ist; der erste Schlauch (3, 30) ist an seinem zweiten Ende mit einem zweiten 4/2-Wegeventil (4, 40) in einer zweiten Anschlussposition (42, 402) des Ventils (4, 40) verbunden; der zweite Schlauch (5, 50) ist an seinem zweiten Ende mit dem zweiten Ventil (4, 40) in einer vierten Anschlussposition (44, 404) des Ventils (4, 40) verbunden; und eine erste Anschlussposition (41, 401) des zweiten Ventils (4, 40) mit einem ersten Ende eines Fluidbehandlungselements (6, 60, 7, 70) verbunden ist;
wobei die 4/2-Wegeventile sind Ventile, bei denen das Fluid von einer Einlassanschluss zu einer benachbarten Anschluss fließt;
wobei, wenn die Ventile (2, 20, 4, 40) in ihrer ersten Position positioniert sind, die erste (21, 201, 41, 401) und zweite Anschlusspositionen (22, 202, 42, 402) durch einen Kanal verbunden sind, und die dritte (23, 203, 43, 403) und vierte Anschlusspositionen (24, 204, 44, 404) durch einen Kanal verbunden sind, wobei, wenn die Ventile (2, 20, 4, 40) in ihrer zweiten Position positioniert sind, die erste (21, 201, 41, 401) und vierte Anschlusspositionen (24, 204, 44, 404) durch einen Kanal verbunden sind, und die zweite (22, 202, 42, 402) und dritte Anschlusspositionen (23), 203, 43, 403) durch einen Kanal verbunden sind;
und worin
- das zweite Ende des Flüssigkeitsbehandlungselements (6, 7) ist mit dritten Anschlussposition (43) des zweiten Ventils (4) verbunden, und dritte Anschlussposition (23) des ersten Ventils (2) verbunden ist zu einem Auslass (8) von der Vorrichtung; oder
- das zweite Ende des Flüssigkeitsbehandlungselements (60, 70) ist mit dritten Anschlussposition (203) des ersten Ventils (20) verbunden, und dritte Anschlussposition (403) des zweiten Ventils (40) verbunden ist zu einem Auslass (80) von der Vorrichtung.

2. Vorrichtung nach Anspruch 1, wobei das Flüssigkeitsbehandlungselement ausgewählt ist aus einem Element zur Sanierung von Verunreinigungen aus der Flüssigkeit und einem Element zur Trennung von Komponenten der Flüssigkeiten, wie einer Chromatographiesäule (6, 60), worin das Flüssigkeitsbehandlungselement gegebenenfalls ferner einen Detektor (7, 70) zum Analysieren der Qualität oder Zusammensetzung oder chromatographischen Auflösung der Flüssigkeitskomponenten umfasst.

3. Vorrichtung nach einem der Ansprüche 1 oder 2, wobei der Druckeinlass mit einem Druckmittel (1, 10) verbunden ist, wobei das Druckmittel vorzugsweise eine Pumpe oder eine Druckgasquelle ist.

4. Vorrichtung nach einem der Ansprüche 1 bis 3, wobei der erste (3, 30) und der zweite Schlauch (5, 50) einen Querschnittsdurchmesser von bis zu 2 mm, vorzugsweise 0,1 bis 0,5 mm, mehr vorzugsweise 0,1 bis 0,3 mm, aufweisen.

5. Vorrichtung nach einem der Ansprüche 1 bis 3, wobei die Vorrichtung zusätzlich eine Trennschleife enthält, wobei die Trennschleife ein drittes 4/2-Wegeventil (9, 90) umfasst, das zwischen dem Flüssigkeitsbehandlungselement (6, 60, 7, 70) und der erste (3, 30) oder zweite Schlauch (5, 50) positioniert ist, worin das dritte Ventil aufweist, eine erste Anschlussposition (91, 901) zum Einströmen der aus dem Flüssigkeitsbehandlungselement (6, 60, 7, 70) fließenden Flüssigkeit, eine zweite Anschlussposition (92, 902) zum Abfließen der Flüssigkeit in Richtung des ersten (3, 30) oder zweiten Schlauchs (5, 50), eine dritte (93, 903) und eine vierte Anschlussposition (94, 904), die beide mit einem dritten Schlauch (95, 905) verbunden sind, wobei der dritte Schlauch (95, 905) eine Schleife zwischen der dritten Anschlussposition (93, 903) und der vierten Anschlussposition (94, 904) des dritten Ventils (9, 90) bildet.

6. Verfahren zum Umwälzen von Flüssigkeiten unter Verwendung der Vorrichtung nach einem der vorhergehenden Ansprüche, wobei die zu rezirkulierende Flüssigkeit in den ersten Schlauch (3, 30) eingeführt wird und die Ventile (2, 20, 4, 40) positioniert sind in ihre erste Position, die die Anschlüsse verbindet, wobei die erste (21, 201, 41, 401) und zweite Anschlusspositionen (22, 202, 42, 402) durch einen Kanal verbunden sind, und die dritte (23, 203, 43, 403)) und vierte Anschlusspositionen (24, 204, 44, 404) durch einen Kanal verbunden sind, und die Flüssigkeit wird durch den Druck angetrieben, der durch den Druckeinlass eingeführt wird, der mit einer ersten Anschlussposition (21, 201) des ersten Ventils (2, 20) verbunden ist, worin die Flüssigkeit fließt durch den ersten Schlauch (3, 30) und durch das zweite Ventil (4, 40) in das Flüssigkeitsbehandlungselement (6, 60, 7, 70), und dann wird die Flüssigkeit aus dem Flüssigkeitsbehandlungselements (6, 60, 7, 70) in den zweiten Schlauch (5, 50) angetrieben; nachdem die umgewälzte Flüssigkeit in dem zweiten Schlauch (5, 50) gesammelt wurde, werden die Ventile (2, 20, 4, 40) in ihre zweite Position geschaltet, die die Anschlüsse verbindet, wobei die erste (21, 201, 41, 401) und vierte Anschlusspositionen (24, 204, 44, 404) sind durch einen Kanal verbunden, und die zweite (22, 202, 42, 402) und dritte Anschlusspositionen (23, 203, 43, 403) sind durch einen Kanal verbunden, und dann wird die umgewälzte Flüssigkeit aus dem zweiten Schlauch (5, 50) über das zweite Ventil (4, 40) in das Flüssigkeitsbehandlungselement (6, 60, 7, 70), und dann aus dem Flüssigkeitsbehandlungselement (6, 60, 7, 70) in den ersten Schlauch (3, 30) angetriebt.

7. Verfahren nach Anspruch 6 unter Verwendung der Vorrichtung nach Anspruch 5, wobei, wenn es erwünscht ist, einen Teil der umgewälzten Flüssigkeits abzutrennen, das dritte Ventil (9, 90) in seine erste Position positioniert ist, in der die erste (91, 901) und vierte Anschlusspositionen (94, 904) sind durch einen Ventilkanal verbunden, und die zweite (92, 902) und dritte Anschlusspositionen (93, 903) sind durch einen Ventilkanal verbunden, und die Flüssigkeit fließend aus dem Flüssigkeitsbehandlungselement (6, 60, 7, 70) wird über das dritte Ventil (9, 90) in die Trennschleife geführt und fließt in den dritten Schlauch (95, 905); und wenn es nicht länger erwünscht ist, Flüssigkeit in der Trennschleife zu sammeln, wird das dritte Ventil (9, 90) in seine zweite Position geschaltet, in der die erste (91, 901) und zweite Anschlusspositionen (92, 902) verbunden sind durch einen Ventilkanal und die dritte (93, 903) und vierte Anschlusspositionen (94, 904) sind durch einen Ventilkanal verbunden.

## Revendications

1. Appareil de recirculation de fluides, ledit appareil comprenant une entrée de pression connectée à une première vanne à 2 voies/4 orifices (2, 20) dans une première position d'orifice (21, 201) de la vanne (2, 20), où une deuxième position d'orifice (22, 202) de la première vanne (2, 20) est connectée à une première extrémité d'un premier tube (3, 30), une quatrième position d'orifice (24, 204) de la première vanne (2, 20) est connectée à une première extrémité d'un deuxième tube (5, 50); le premier tube (3, 30) est à sa deuxième extrémité connectée à une deuxième vanne à 2 voies/4 orifices (4, 40) dans une seconde position d'orifice (42, 402) de la vanne (4, 40), le second tube (5, 50) est à sa seconde extrémité connecté à la deuxième vanne (4, 40) dans une quatrième position d'orifice (44, 404) de la vanne (4, 40); et une première position d'orifice (41, 401) de la deuxième vanne (4, 40) est connectée à une première extrémité d'un élément de traitement de fluide (6, 60, 7, 70),
dans lequel les vannes à 2 voies/4 orifices sont des vannes dans lesquelles le fluide s'écoule d'un orifice d'entrée vers un orifice voisin;
où, lorsque les vannes (2, 20, 4, 40) sont positionnées dans leur première position, les première (21, 201, 41, 401) et deuxième positions d'orifice (22, 202, 42, 402) sont connectées par un canal, et les troisième (23, 203, 43, 403) et quatrième positions de port (24, 204, 44, 404) sont connectées par un canal, et où, lorsque les vannes (2, 20, 4, 40) sont commutées dans leur deuxième position, les première (21, 201, 41, 401) et quatrième positions d'orifice (24, 204, 44, 404) sont connectées par un canal, et les deuxième (22, 202, 42, 402) et troisième positions de port (23 , 203, 43, 403) sont connectées par un canal;
et où
- la deuxième extrémité de l'élément de traitement de fluide (6, 7) est connectée à une troisième position d'orifice (43) de la deuxième vanne (4), tandis qu'une troisième position d'orifice (23) de la première vanne (2) est connectée à une sortie (8) de l'appareil; ou
- la deuxième extrémité de l'élément de traitement de fluide (60, 70) est connectée à une troisième position d'orifice (203) de la première vanne (20), tandis qu'une troisième position d'orifice (403) de la deuxième vanne (40) est connectée à une sortie (80) de l'appareil.

2. Appareil selon la revendication 1, dans lequel l'élément de traitement de fluide est choisi parmi un élément pour l'élimination des impuretés du fluide et un élément pour la séparation des composants du fluide, tel qu'une colonne chromatographique (6, 60), et où éventuellement l'élément de traitement de fluide comprend en outre un détecteur (7, 70) pour analyser la qualité ou la composition ou la résolution chromatographique des composants fluides.

3. Appareil selon l'une quelconque des revendications 1 ou 2, dans lequel l'entrée de pression est connectée à un moyen de mise sous pression (1, 10), dans lequel de préférence le moyen de mise sous pression est une pompe ou une source de gaz sous pression.

4. Appareil selon l'une quelconque des revendications 1 à 3, dans lequel le premier tube (3, 30) et le deuxième tube (5, 50) ont un diamètre de section allant jusqu'à 2 mm, de préférence 0,1 à 0,5 mm, plus de préférence 0,1 à 0,3 mm.

5. Appareil selon l'une quelconque des revendications 1 à 3, où l'appareil contient en outre une boucle de séparation, où ladite boucle de séparation comprend une troisième vanne à 2 voies/4 orifices (9, 90), positionnée entre l'élément de traitement de fluide (6, 60, 7, 70) et le premier tube (3, 30) ou le deuxième tube (5, 50), et où ladite troisième vanne a une première position d'orifice (91, 901) pour l'entrée du fluide s'écoulant de l'élément de traitement de fluide (6, 60, 7, 70), une deuxième position d'orifice (92, 902) pour l'écoulement du fluide vers le premier tube (3, 30) ou le deuxième tube (5, 50), une troisième (93, 903) et une quatrième position d'orifice (94, 904) qui sont toutes deux connectées à un troisième tube (95, 905), ledit troisième tube (95, 905) formant une boucle entre la troisième position d'orifice (93, 903) et la quatrième position d'orifice (94, 904) de la troisième valve (9, 90).

6. Procédé de recirculation de fluide utilisant l'appareil selon l'une quelconque des revendications précédentes, dans lequel le fluide à recirculer est introduit dans le premier tube (3, 30) et les vannes (2, 20, 4, 40) sont positionnées dans leur première position reliant les ports, dans lequel les première (21, 201, 41, 401) et seconde positions de port (22, 202, 42, 402) sont connectées par un canal, et les troisième (23, 203, 43, 403) et quatrième positions d'orifice (24, 204, 44, 404) sont connectées par un canal, et le fluide est propulsé par la pression, introduite par l'entrée de pression reliée à une première position d'orifice (21, 201) de la première vanne (2, 20), à travers le premier tube (3, 30) et à travers la deuxième vanne (4, 40) dans l'élément de traitement de fluide (6, 60, 7, 70), puis le fluide est propulsé de l'élément de traitement de fluide (6, 60, 7, 70) dans le deuxième tube (5, 50); après que le fluide recirculé est collecté dans le deuxième tube (5, 50), les vannes (2, 20, 4, 40) sont commutées dans leur deuxième position reliant les orifices, dans lequel les première (21, 201, 41, 401) et quatrièmee positions d'orifice (24, 204, 44, 404) sont connectées par un canal, et les deuxième (22, 202, 42, 402) et troisième positions d'orifice (23, 203, 43, 403) sont connectées par un canal, et puis le fluide recirculé est propulsé depuis le deuxième tube (5, 50) dans l'élément de traitement de fluide (6, 60, 7, 70) via la deuxième vanne (4, 40), puis depuis l'élément de traitement de fluide (6, 60, 7, 70) dans le premier tube (3, 30).

7. Procédé selon la revendication 6, utilisant l'appareil selon la revendication 5, dans lequel lorsque l'on souhaite séparer une partie du fluide recirculé, la troisième vanne (9, 90) est positionnée dans une première position dans laquelle les première (91, 901) et quatrième positions d'orifice (94, 904) sont connectées par un canal de vanne, et les deuxième (92, 902) et troisième positions d'orifice (93, 903) sont connectées par un canal de vanne, et le fluide s'écoulant de l'élément de traitement de fluide (6, 60, 7, 70) est amené à entrer dans la boucle de séparation via la troisième valve (9, 90) et s'écoule dans le troisième tube (95, 905); et lorsqu'il n'est plus souhaité de collecter le fluide dans la boucle de séparation, la troisième vanne (9, 90) est commutée dans sa deuxième position dans laquelle les première (91, 901) et deuxième positions d'orifice (92, 902) sont connectées par un canal de vanne, et les troisième (93, 903) et quatrième positions d'orifice (94, 904) sont connectées par un canal de vanne.
